(19) Europäisches Patentamt / European Patent Office / Office européen des brevets

(11) **EP 3 821 299 B1**

(12) # EUROPÄISCHE PATENTSCHRIFT

(45) Veröffentlichungstag und Bekanntmachung des Hinweises auf die Patenterteilung:
**11.10.2023  Patentblatt 2023/41**

(21) Anmeldenummer: **19736684.2**

(22) Anmeldetag: **04.07.2019**

(51) Internationale Patentklassifikation (IPC):
**G03H 1/02** *(2006.01)*     **G03H 1/26** *(2006.01)*
**G03H 1/22** *(2006.01)*     **F21S 41/00** *(2018.01)*
**B60Q 1/00** *(2006.01)*

(52) Gemeinsame Patentklassifikation (CPC):
**G03H 1/0248; G03H 1/2286; G03H 1/2645;**
F21S 43/26; G03H 2001/2226; G03H 2001/2231;
G03H 2001/266; G03H 2210/30; G03H 2222/12;
G03H 2240/51; G03H 2240/53; G03H 2240/55

(86) Internationale Anmeldenummer:
**PCT/EP2019/067965**

(87) Internationale Veröffentlichungsnummer:
**WO 2020/011636 (16.01.2020 Gazette 2020/03)**

(54) **LEUCHTEINRICHTUNG FÜR FAHRZEUGE**

ILLUMINATION DEVICE FOR VEHICLES

DISPOSITIF D'ÉCLAIRAGE POUR VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2018  DE 102018117001**

(43) Veröffentlichungstag der Anmeldung:
**19.05.2021  Patentblatt 2021/20**

(73) Patentinhaber: **Carl Zeiss Jena GmbH**
**07745 Jena (DE)**

(72) Erfinder: **THOMAE, Daniel**
**07745 Jena (DE)**

(74) Vertreter: **Sticht, Andreas**
**Kraus & Weisert**
**Patentanwälte PartGmbB**
**Thomas-Wimmer-Ring 15**
**80539 München (DE)**

(56) Entgegenhaltungen:
**DE-A1-102016 117 969     US-A1- 2011 194 163**

• **PEERCY M S ET AL: "WAVELENGTH SELECTION FOR TRUE-COLOR HOLOGRAPHY", APPLIED OPTICS, OPTICAL SOCIETY OF AMERICA, WASHINGTON, DC; US, Bd. 33, Nr. 29, 10. Oktober 1994 (1994-10-10), Seiten 6811-6817, XP000473150, ISSN: 0003-6935, DOI: 10.1364/AO.33.006811**
• **PHILIPPE GENTET ET AL: "New LED's Wavelengths Improve Drastically the Quality of Illumination of Pulsed Digital Holograms", DIGITAL HOLOGRAPHY AND THREE-DIMENSIONAL IMAGING, 1. Januar 2017 (2017-01-01), Seite M3A.4, XP055621234, Washington, D.C. DOI: 10.1364/DH.2017.M3A.4 ISBN: 978-1-943580-28-6**

**Beschreibung**

Die vorliegende Anmeldung betrifft Leuchteinrichtungen für Fahrzeuge, insbesondere Leuchteinrichtungen, welche als Signalleuchten wie Fahrtrichtungsanzeiger (Blinker) oder Bremslichter oder auch als Schlussleuchten (Rücklicht) verwendbar sind.

Leuchteinrichtungen werden in Fahrzeugen benutzt, um zum einen die Umgebung des Fahrzeugs zu beleuchten, um einem Fahrer des Fahrzeugs auch in Dunkelheit Sicht zu ermöglichen, und zum anderen, um andere Personen oder Fahrzeuge auf das mit der Leuchteinrichtung ausgerüstete Fahrzeug aufmerksam zu machen. Beispiele für derartige Leuchteinrichtungen sind Frontscheinwerfer, Schlussleuchten, Bremslichter oder Fahrtrichtungsanzeiger.

Neben ihrer technischen Funktion werden derartige Leuchteinrichtungen zunehmend auch dafür genutzt, beispielsweise Fahrzeugen einer bestimmten Marke ein unverwechselbares Aussehen zu geben. Dabei wurde zunächst hauptsächlich die äußere Form derartiger Leuchteinrichtungen als Gestaltungsmerkmal genutzt. Zunehmend wird auch die Leuchtsignatur derartiger Leuchteinrichtungen charakteristisch ausgestaltet, d.h. das "Erscheinungsbild" des Lichtes wird als Gestaltungsmerkmal genutzt. Beispielsweise werden charakteristische Leuchtsignaturen bei Fahrzeugrückleuchten eingesetzt.

In der deutschen Patentanmeldung DE 10 2016 117 969 A1 der Anmelderin werden hierzu Vorrichtungen beschrieben, bei welchen mittels Hologrammen, insbesondere mittels Volumenhologrammen, Leuchtsignaturen erzeugt werden können. In dieser Anmeldung wird die Verwendung sowohl von Reflexionshologrammen als auch von Transmissionshologrammen beschrieben. Bei Transmissionshologrammen erfolgt die Beleuchtung des Hologramms aus einem Halbraum des Hologramms (d.h. von einer Seite des Hologramms), und die Betrachtung erfolgt aus dem anderen Halbraum (d.h. von der anderen Seite des Hologramms). Bei Reflexionshologrammen erfolgt hingegen die Beleuchtung von der gleichen Seite wie die Betrachtung. Dies kann, wenn wenig Bauraum zur Verfügung steht, schwierig zu realisieren sein, insbesondere wenn das Hologramm nahe der Außenseite des Fahrzeugs angeordnet werden muss. Auf der anderen Seite haben Reflexionshologramme den Vorteil, dass sie im Allgemeinen stärker wellenlängenselektiv arbeiten als Transmissionshologramme, d.h. abhängig von der Dicke, wie später erläutert werden wird, nur Licht eines engen Wellenlängenbereichs als Leuchtsignatur abgebildet wird.

Hierzu beschreibt die deutsche Patentanmeldung 10 2017 124 296.1 der Anmelderin eine Anordnung mit einem Lichtleitkörper, mit welchem auch bei Reflexionshologrammen eine kompakte Anordnung möglich ist.

Weiterer Stand der Technik mit Bezug auf die Beleuchtung von Hologrammen, sowie deren Wellenlängenselektivität, kann in den folgenden Dokumenten gefunden werden: US2011/194163, PEERCY M S ET AL, "WAVELENGTH SELECTION FOR TRUE-COLOR HOLOGRAPHY", APPLIED OPTICS, 1994, Vol. 33, No.29, pp.6811-6817, PHILIPPE GENTET ETAL, "LED's Wavelengths Improve Drastically the Quality of Illumination of Pulsed Digital Holograms", DIGITAL HOLOGRAPHY AND THREE-DIMENSIONAL IMAGING, 2017, M3A.4.

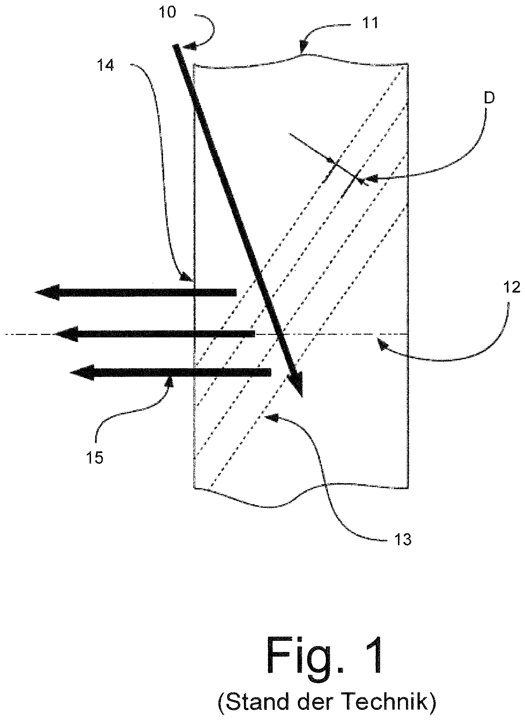

Bei derartigen Leuchteinrichtungen wird ein Objekt entsprechend einer gewünschten Leuchtsignatur in ein Hologramm "geschrieben". Bei Beleuchtung mit einem sogenannten Beleuchtungslichtstrahl erscheint dann dieses Objekt als reelles oder virtuelles holografisches Objekt, das gleichsam das reelle oder virtuelle Bild des Hologramms darstellt. Schematisch ist diese Vorgehensweise in der Fig. 1 dargestellt.

Die Fig. 1 zeigt eine holografische Schicht 11, die mit einem Beleuchtungslichtstrahl 10 beleuchtet wird. In das Hologramm sind im Wesentlichen Bragg-Ebenen 13 geschrieben, von denen in Fig. 1 zur Veranschaulichung vier Bragg-Ebenen 13 dargestellt sind. Diese weisen einen Abstand D auf. Durch die Bragg-Ebenen 13 wird der Beleuchtungslichtstrahl 10 zu Objektlichtstrahlen 15 gebeugt. Hierzu wird an jeder Bragg-Ebene 13 ein kleiner Teil des Beleuchtungslichtstrahls 10 reflektiert, und die Richtung der Objektlichtstrahlen 15 ergibt sich dann durch konstruktive Interferenz dieser Vielzahl von reflektierten Wellen. Die Bragg-Ebenen 13 müssen dafür einen Abstand D aufweisen, welcher an die zu beugende Wellenlänge angepasst ist, und beträgt für ein Reflexionshologramm minimal die halbe Wellenlänge im Material, was für eine Wellenlänge von beispielsweise 633 nm (im roten Bereich, beispielsweise für Rücklichter) und die Brechzahl n = 1,5 einen Bragg-Ebenenabstand D gleich 211 nm ergibt. 633 nm entspricht dabei einer Helium-Neon-Laserwellenlänge, welche beispielsweise für die Aufzeichnung des Hologramms benutzt werden kann. In dem Beispiel der Fig. 1 sind diese Objektlichtstrahlen 15 parallel zu einer Normalen 12 auf einer Grenzfläche 14 der holografischen Schicht 11. Die Grenzfläche 14 kann beispielsweise eine Grenzfläche zu einem Lichtleitkörper wie in der erwähnten deutschen Patentanmeldung 10 2017 124 269.1 beschrieben oder eine Grenzfläche zu Luft sein, je nach Implementierung der Leuchteinrichtung.

Zu beachten ist, dass die Darstellung einer einzigen Gruppe von Bragg-Ebenen 13 nur schematisch zu verstehen sind und lokal für einen Bildpunkt des erzeugten holografischen Objektes gilt. Für jeden anderen Bildpunkt des holografischen Objekts weisen die Bragg-Ebenen eine andere Neigung auf. Bei einem ausgedehnten holografischen Objekt, d.h. einem Objekt, dass nicht nur aus einem einzigen Bildpunkt besteht, wie es Gegenstand der vorliegenden Anmeldung ist, sind also eine Vielzahl von Gruppen von Bragg-Ebenen verschiedener Neigungen überlagert, um eine Vielzahl von Bildpunkten des holografischen Objekts zu erzeugen.

Als Zahlenbeispiel wird angenommen, dass die holografische Schicht 11 eine Brechzahl von 1,5 aufweist und der Beleuchtungslichtstrahl 10 unter einem Winkel von 70 Grad auf die holografische Schicht 11 trifft (gemessen zur Oberflächennormale 12, wie in der Optik üblich). Brechungseffekte an der Grenzfläche 14 werden vernachlässigt, was dann zutreffend ist, wenn die Brechzahl des Materials der Umgebung im Wesentlichen demjenigen der holografischen Schicht 11 entspricht. Ansonsten können Brechungseffekte, durch die sich der Winkel ändert, auch auf einfache Weise durch geometrische Betrachtungen berücksichtigt werden.

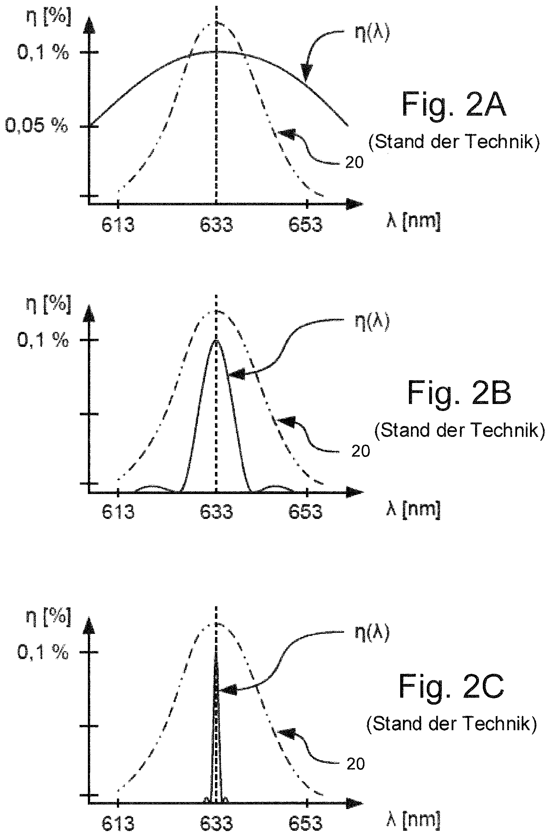

Derartige holografische Schichten sind wie bereits erläutert wellenlängenselektiv, d.h. der Bragg-Ebenenabstand D ist angepasst, um Licht einer bestimmten Wellenlänge zu beugen. Allerdings wird Licht von benachbarten Wellenlängen immer noch bis zu einem gewissen Grad gebeugt. Wie "scharf" die Wellenlängenselektivität ist, hängt dabei auch von der Dicke der holografischen Schicht 11 und der damit verbundenen Anzahl der Bragg-Ebenen 13 ab. Dies wird nun unter Bezugnahme auf die Fig. 2A bis 2C erläutert.

Die Fig. 2A bis 2C zeigen jeweils die Beugungseffizienz $\eta$ in Prozent über der Wellenlänge $\lambda$ in Nanometer des Beleuchtungslichtstrahls 10. Dabei zeigt die Fig. 2A ein Beispiel für eine Hologrammdicke von 2,5 $\mu$m, die Fig. 2B ein Beispiel für eine Hologrammdicke von 25 $\mu$m und die Fig. 2C ein Beispiel für eine Hologrammdicke von 250 $\mu$m. Die Hologramme wurden dabei für alle Dicken so eingerichtet, dass die Spitzeneffizienz bei 0,1 % bei 633 nm liegt, d.h. 0,1 % des einfallenden Beleuchtungslichtstrahls 10 werden in dem betrachteten Bereich des Hologramms zu dem Objektlichtstrahl 15 gebeugt. Der restliche Beleuchtungslichtstrahl 10 wird z.B. bei der Anordnung der deutschen Patentanmeldung 10 2017 124 296.1 in einem Lichtleitkörper reflektiert und an andere Stellen der holografischen Schicht 11 geleitet, so dass insgesamt die holografische Schicht 11 ausgeleuchtet wird und über eine größere Fläche Objektlichtstrahlen 15 emittiert werden. Um diese gleiche Spitzeneffizienz von 0,1 % zu erreichen, sind verschiedene Modulationen $\Delta$n der Brechzahl je nach Hologrammdicke erforderlich, d.h. Änderungen der Brechzahl, um die Bragg-Ebenen 13 auszubilden. So ist für eine Hologrammdicke von 2,5 $\mu$m (Fig. 2A) $\Delta n = 1{,}49 \cdot 10^{-3}$, für eine Hologrammdicke von 25 $\mu$m $\Delta n = 1{,}49 \cdot 10^{-4}$, und für eine Hologrammdicke von 250 $\mu$m $\Delta n = 1{,}49 \cdot 10^{-5}$. Mit sinkender Hologrammdicke steigt also das benötigte $\Delta$n zur Erreichung einer spezifischen Spitzeneffizienz. Der $\Delta$n-"Vorrat", d.h. die in einem Hologramm insgesamt implementierbare Brechungsindexvariation ist dabei endlich und muss gleichsam auf alle virtuellen Bildpunkte des zu erzeugenden holografischen Bildes "verteilt" werden.

Wie in den Fig. 2A bis 2C zu sehen ist, ergibt sich für ein dünneres Hologramm eine breitere Verteilung der Beugungseffizienz, die mit zunehmender Hologrammdicke schmaler wird. In anderen Worten werden bei dünneren Hologrammen auch Wellenlängen benachbart zu der Wellenlänge 633 nm in einem breiteren Bereich gebeugt. So fällt im Falle der Fig. 2A die Beugungseffizienz auf 0,05 % (50 % des Maximalwertes von 0,1 %) bei 597 nm bzw. 695,7 nm, im Falle der Fig. 2B bei 629,5 nm und 636,5 nm, und im Falle der Fig. 2C bei 632,64 nm und 633,36 nm.

Insbesondere im Automobilbereich werden als Lichtquellen zur Erzeugung des Beleuchtungslichtstrahls 10 bevorzugt Leuchtdioden eingesetzt. Derartige Leuchtdioden weisen eine gewisse spektrale Breite auf. Ein Beispiel für eine derartige Spektralverteilung typischer Leuchtdioden ist durch Kurven 20 in den Fig. 2A bis 2C angedeutet.

Dies bewirkt, dass im Falle der Fig. 2C mit starker Wellenlängenselektivität nur ein sehr kleiner Teil der Intensität der Leuchtdiode gebeugt wird, was zu einem vergleichsweise wenig lichtstarken Bild führt. Dies kann bei Leuchteinrichtungen für Fahrzeuge unerwünscht sein bzw. entsprechend starke Beleuchtung erfordern, wobei dann ein großer Teil des Lichtes ungenutzt bleibt.

Im Falle der Fig. 2A wird hingegen wegen der breiteren Verteilung der Beugungseffizienz $\eta(\lambda)$ ein größerer Teil des verfügbaren Spektrums genutzt. Allerdings wird zwar ein größerer Teil des Spektrums gebeugt, der Beugungswinkel ist jedoch wellenlängenabhängig. In anderen Worten wird nur die Wellenlänge $\lambda = 633$ nm in dem Beispiel der Fig. 2A bis 2C genau in die gewünschte Richtung (beispielsweise parallel zur Oberflächennormalen 12 in Fig. 1) gebeugt, während benachbarte Wellenlängen unter geringfügig abweichenden Winkeln gebeugt werden. Dies wird nun etwas genauer erläutert:

Der Wechselwirkungsmechanismus, mit welchem das auf das Hologramm einfallende Licht umgelenkt wird, ist Beugung. Die nach der Lichtwechselwirkung resultierenden Beugungswinkel können über die Gittergleichung berechnet werden:

$$n' \cdot \sin(\alpha') = n \cdot \sin(\alpha_{in}) + m \cdot \lambda/p$$

Dabei ist n die Brechungszahl für den einfallenden Strahl, n' die Brechungszahl für den ausfallenden/gebeugten Strahl, $\alpha_{in}$ der Einfallswinkel, $\alpha'$ der Ausfalls- bzw. Beugungswinkel, $\lambda$ die Wellenlänge, m die Ordnung (Diese ist bei Volumengittern im Allgemeinen -1 oder +1) und p die Gitterperiode.

Für den Objektlichtstrahl 15 findet im Beispiel der Fig. 1 eine Umlenkung vom Einfallswinkel 70° des Beleuchtungslichtstrahls 10 auf 0° als Ausfalls- bzw. Beugungswinkel (in Reflexion) statt. Die Gitterperiode berechnet sich mit den oben getroffenen Annahmen zur Brechzahlen und zur Wellenlänge damit zu:

$$p = \frac{m \cdot \lambda}{n \cdot (-\sin(\alpha_{in}) - \sin\alpha')} = 449{,}083\,nm$$

Für die weitere Rechnung wird eine Leuchtdiode (LED) mit 633 nm Zentralwellenlänge angenommen, deren Emissionsspektrum entsprechend den Kurven 20 so gestaltet ist, dass ihre emittierte Leistung für 623 nm und für 643 nm auf 50 % abfällt. Das Abfallkriterium entspricht damit jenem, welches oben für die Hologrammeffizienz verwendet wurde.

Für die Bewertung der Sichtbarkeit der Strahlung wird zur Vereinfachung davon ausgegangen, dass ein virtueller Leuchtpunkt des erzeugten virtuellen Objekts, von welchem die Objektlichtstrahlen 15 scheinbar emittiert werden, nicht mehr sichtbar ist, wenn die zum Fahrzeug-Äußeren emittierte Leistung 50 % der maximal emittierten Leistung unterschreitet. Dies ist eine artifiziell gewählte und sehr optimistische Annahme, da das menschliche Auge als logarithmischer Detektor auch auf kleine Restlichtmengen noch empfindlich reagiert. Ebenso wird aus Gründen der Einfachheit auch die spektrale Empfindlichkeitskurve des menschlichen Auges vernachlässigt.

Für die drei oben gewählten Hologrammdicken von 2,5, 25 und 250 μm kann man nun das spektrale Wellenlängenband abschätzen, welches zum Betrachter reflektiert wird:

- 2,5 μm Hologrammdicke (Fig. 2A): Die sinc²-förmige Effizienzkurve des Hologramms ist wesentlich breiter als die Emissionskurve der LED, so dass die 50 %-Grenzwellenlänge im Wesentlichen durch die LED dominiert wird. Als gute Abschätzung kann man somit die 50 % Grenzwellenlängen des LED von 623 nm und 643 nm annehmen.

- 25 μm Hologrammdicke (Fig. 2B): Hier dominiert die sinc²-förmige Kurve des Hologramms, so dass die spektrale Breite der LED fast keine Rolle spielt Die 50 %-Grenzwellenlängen betragen somit näherungsweise 629,5 und 636,5 nm.

- Gleiches gilt für das 250 μm dicke Hologramm, wo die 50 % Grenzwellenlängen durch die Hologrammfunktion bestimmt werden und bei 632,64 nm und 633,36 nm liegen.

Wie jedoch bereits erwähnt, ist auch der Ablenkwinkel des Hologramms gemäß der Gittergleichung wellenlängenabhängig. Für den Winkel des Objektlichtstrahls 15 für die 50 % Grenzwellenlängen, werden in Abhängigkeit der Hologrammdicke folgende Werte erhalten:

- 2,5 μm Hologrammdicke: + 0,851 ° für 623 nm und -0,851 ° für 643 nm
- 25 μm Hologrammdicke: + 0,298° für 629,5 nm und -0,298° für 636,5 nm
- 250 μm Hologrammdicke: +0,031 ° für 632,64 nm und -0,031 für 633,36 nm

Ein Hologramm gibt das beschriebene Bild als virtuelles Objekt wieder, so dass es dem Betrachter erscheint, als läge das Objekt beispielsweise hinter dem Hologramm oder vor dem Hologramm real vor. Streng genommen gilt dies nur für die Aufzeichnungswellenlänge des Hologramms, im obigen Beispiel 633 nm.

Jedoch liegen alle oben genannten Grenzwellenlängen noch nah genug an der Aufzeichnungswellenlänge von 633 nm, so dass die Verzerrung des virtuellen Bildes durch die Abweichung von der Aufzeichnungswellenlänge ohne großen Genauigkeitsverlust vernachlässigt werden kann. Mit dieser Näherung, den soeben berechneten Ablenkwinkeln sowie dem als Beispiel gewählten Abstand des virtuellen Bildpunkts des - in diesem Fall virtuellen - holografischen Objekts von 32 cm hinter dem Hologramm kann die spektral auftretende Verschiebung von virtuellen Bildpunkten des virtuellen Objekts berechnet werden. Die Verschiebung vollzieht sich in der Darstellung der Fig. 1 nach oben oder unten und wird hier als Abstand von der Sollposition bei der Wellenlänge 633 nm angegeben. Verschiebungen nach oben sind positiv, solche nach unten negativ.

Für die betrachteten Hologrammdicken ergibt sich damit als Verschiebung:

- 2,5 μm Hologrammdicke: +4,8 mm für 623 nm und -4,8 mm für 643 nm
- 25 μm Hologrammdicke: +1.7 mm für 629,5 nm und -1,7 mm für 636,5 nm
- 250 μm Hologrammdicke: +0.2 mm für 632,64 nm und -0,2 mm für 633.36 nm.

Für einen Betrachter bedeutet dies praktisch, dass eine z.B. horizontal im Bild (d.h. senkrecht zur Zeichenebene in Fig. 1) verlaufende, sehr dünne Linie im Fall des 2,5 μm dicken Hologramms auf 1 cm verbreitert wird. Real ist dieser Effekt noch viel stärker ausgeprägt, das das menschliche Auge als logarithmischer Detektor auch bei nur 1 % oder 0,1 % der Maximalintensität das vom Hologramm bereit gestellte Leuchtsignal zu erfassen vermag. Die Betrachtung mit dem 50 % Abfall dient daher nur der Verdeutlichung, gibt jedoch nicht den physiologischen Wahrnehmungsprozess wieder.

Somit werden bei dünnen Hologrammen insbesondere feine Strukturen des virtuellen Objekts verbreitert, so dass das virtuelle Objekt gegebenenfalls nicht wie beabsichtigt wahrgenommen wird, sondern mehr oder weniger stark verschmiert. Auf der anderen Seite ist wie oben erläutert bei dicken Hologrammen wie in der Fig. 2C der Anteil des Lichtes des Beleuchtungsstrahls 10, welcher im Falle einer vergleichsweise breitbandigen Beleuchtung wie durch Leuchtdioden tatsächlich genutzt wird, sehr gering, was ebenfalls unerwünscht ist.

Es ist daher eine Aufgabe der vorliegenden Erfindung, Hologramme für Leuchteinrichtungen für Fahrzeuge und entsprechende Leuchteinrichtungen bereitzustellen, mit welchen einerseits eine Wiedergabe auch vergleichsweise feiner Strukturen gewährleistet ist und auf der anderen Seite eine verbesserte Ausnutzung des Beleuchtungslichtes gegeben ist.

Diese Aufgabe wird gelöst durch ein Hologramm für eine Leuchteinrichtung für Fahrzeuge gemäß Anspruch 1. Die Unteransprüche definieren weitere Ausführungsformen des Hologramms sowie eine Leuchteinrichtung für Fahrzeuge mit einem entsprechenden Hologramm.

Erfindungsgemäß wird ein Hologramm für eine Leuchteinrichtung für Fahrzeuge bereitgestellt, entsprechend Anspruch 1. Wie oben erläutert, ist ein ausgedehntes holografisches Objekt ein Objekt, das nicht nur aus einem Bildpunkt besteht, sondern eine räumliche Ausdehnung aufweist. Die Rekonstruktionswellenlänge ist dabei die Wellenlänge des Lichts, mit der das Hologramm zur Rekonstruktion des holografischen Objekts beleuchtet wird.

Durch die Bereitstellung der mehreren Hologrammstrukturen für verschiedene Rekonstruktionswellenlängen kann dabei insgesamt eine bessere Ausnutzung eines Beleuchtungslichtstrahls erfolgen.

Jede der Vielzahl überlagerter holografischer Strukturen kann für einen, insbesondere jeden, Bildpunkt des holografischen Objekts lokal eine zugeordnete Gruppe von Bragg-Ebenen aufweisen, wobei die Bragg-Ebenen von einem Bildpunkt des holografischen Objekts zugeordneter Gruppen verschiedener Strukturen lokal zueinander parallel sind und den der jeweiligen Struktur zugeordneten Wellenlängen entsprechende Abstände zwischen den Bragg-Ebenen aufweisen. Durch die parallelen Bragg-Ebenen mit unterschiedlichen Bragg-EbenenAbständen wird die gleiche Beugungsrichtung für die jeweiligen Rekonstruktionswellenlängen erreicht. Die Rekonstruktionswellenlänge ist dabei diejenige Wellenlänge, für die die jeweilige Gruppe die maximale Beugungseffizienz aufweist.

Eine Dicke einer aktiven Schicht des Hologramms kann größer als 50 $\mu$m, insbesondere größer oder gleich 140 $\mu$m oder noch größer, z.B. größer als 200 $\mu$m oder größer als 250 $\mu$m sein.

Bei derartigen Hologrammdicken liegt eine hohe Wellenlängenselektivität vor, was eine Verbreiterung von Strukturen in einem durch Beleuchtung des Hologramms erzeugten virtuellen Objekt verringert.

Mindestens drei der Rekonstruktionswellenlängen liegen in der beanspruchten Erfindung in einem Wellenlängenintervall von 50 nm, insbesondere 25 nm, also im Wesentlichen innerhalb oder etwas außerhalb des Spektralbereichs einer typischen Lichtquelle wie einer Leuchtdiode, um das Spektrum der Lichtquelle gut auszunutzen.

Die Vielzahl überlagerter holografischer Strukturen kann mehr als drei, insbesondere mehr als fünf, holografische Strukturen umfassen. Durch eine größere Anzahl von Strukturen mit jeweils verschiedenen zugeordneten Rekonstruktionswellenlängen kann eine größere Ausnutzung des Spektrums einer Lichtquelle erreicht werden.

Des Weiteren wird eine Leuchteinrichtung für Kraftfahrzeuge bereitgestellt, umfassend:

eine Lichtquellenanordnung zum Erzeugen eines Beleuchtungslichtstrahls,
ein Hologramm wie oben beschrieben, und
eine optische Anordnung zum Lenken des Beleuchtungslichtstrahls auf das Hologramm.

Die zugeordneten Rekonstruktionswellenlängen können über einen Spektralbereich verteilt sein, welcher größer ist als eine Halbwertsbreite eines Spektrums der Lichtquellenanordnung. Hierdurch kann eine Drift eines Spektrums der Lichtquellenanordnung, z.B. eine thermische Drift, zumindest teilweise kompensiert werden.

Halbwertsbreiten von den Rekonstruktionswellenlängen zugeordneten Beugungseffizienzen des Hologramms können sich zumindest für manche der Wellenlängen überlappen.

Indem die Rekonstruktionswellenlängen der mehreren Hologrammstrukturen so in einem vergleichsweise kleinen Bereich liegen, kann das Spektrum einer typischerweise verwendeten Lichtquellenanordnung wie einer Leuchtdiode gut ausgenutzt werden.

Die Erfindung wird nachfolgend anhand von Ausführungsbeispielen unter Bezugnahme auf die beigefügten Zeichnungen näher erläutert. Es zeigen:

Fig. 1 ein Hologramm gemäß dem Stand der Technik,
Fig. 2A bis 2C Grafen zur Veranschaulichung der Beugungseffizienz von Hologrammen verschiedener Dicken,
Fig. 3 eine Schnittansicht einer Leuchteinrichtung gemäß einem Ausführungsbeispiel,
Fig. 4 eine schematische Darstellung eines Hologramms gemäß einem Ausführungsbeispiel, und

Fig. 5A bis 5C Grafen zur Veranschaulichung der Beugungseffizienz von Hologrammen verschiedener Ausführungsbeispiele entsprechend der Erfindung.

Im Folgenden werden verschiedene Ausführungsbeispiele unter Bezugnahme auf die beigefügten Zeichnungen erläutert. Es ist zu bemerken, dass diese Ausführungsbeispiele nur der Veranschaulichung dienen und nicht als einschränkend auszulegen sind.

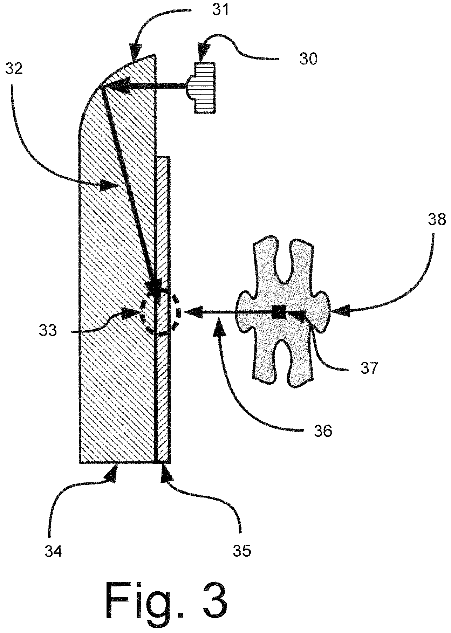

Die Fig. 3 zeigt eine Schnittansicht einer Leuchteinrichtung gemäß einem Ausführungsbeispiel.

Die Leuchteinrichtung der Fig. 3 umfasst eine Lichtquellenanordnung 30, welche beispielsweise eine oder mehrere Leuchtdioden aufweisen kann. Wenn die Leuchteinrichtung der Fig. 3 eine Rückleuchte ist, können diese Leuchtdioden insbesondere rote Leuchtdioden sein, d.h. im roten Spektralbereich emittieren. Für andere Arten von Leuchteinrichtungen können entsprechend Lichtquellen verwendet werden, die in einem anderen Teil des Spektrums (beispielsweise gelb für Fahrtrichtungsanzeiger) oder breitbandiges Weißlicht (beispielsweise für Frontscheinwerfer) emittieren. Zudem weist die Leuchteinrichtung der Fig. 3 ein Reflexionshologramm 35 auf, das bei Beleuchtung durch Licht von der Lichtquellenanordnung 30 eine Leuchtsignatur erzeugt, d.h. das Licht beugt bzw. gerichtet streut, um ein in dem Reflexionshologramm 35 gespeichertes virtuelles Objekt wiederzugeben, von welchem das Licht dann scheinbar ausgeht. Dieses virtuelle Objekt kann insbesondere außerhalb des Fahrzeugs liegen, in dem die Leuchteinrichtung der Fig. 3 eingebaut ist, um somit den Eindruck einer Leuchteinrichtung außerhalb des Fahrzeugs (beispielsweise bei einer Rückleuchte hinter dem Fahrzeug) hervorzurufen.

Das Reflexionshologramm 35 ist dabei ein erfindungsgemäßes Reflexionshologramm, welches Hologrammstrukturen für mehrere Rekonstruktionswellenlängen (im Folgenden auch einfach als Wellenlängen bezeichnet) aufweist. Die Implementierung eines derartigen erfindungsgemäßen Hologramms wird später näher erläutert.

Bei dem Ausführungsbeispiel der Fig. 3 gelangen Strahlenbündel 32 zu einem Strahlablenkungsbereich 31 eines Lichtleitkörpers 34. In dem Strahlablenkungsbereich 31 werden die Strahlenbündel 32 derart abgelenkt, dass sie das Reflexionshologramm 35 beleuchten. Bevorzugt liegt die Brechzahl des Lichtleitkörpers 34 dabei nahe an der Brechzahl des Reflexionshologramms 35, um Reflexionsverluste an internen Grenzflächen möglichst gering zu halten.

Bis auf die Verwendung des erfindungsgemäßen Hologramms 35 entspricht die Leuchteinrichtung der Fig. 3 einer in der eingangs erwähnten deutschen Patentanmeldung 10 2017 124 296.1 beschriebenen Leuchteinrichtung und wird nicht weiter detailliert beschrieben. Diese Leuchteinrichtung dient als ein Beispiel für den Einsatz des erfindungsgemäßen Hologramms 35. Ein derartiges erfindungsgemäßes Hologramm kann jedoch auch in anderen Leuchteinrichtungen für Fahrzeuge, beispielsweise anderen in der deutschen Patentanmeldung 10 2017 124 296.1 beschriebenen Leuchteinrichtungen oder auch in der DE 10 2016 117 969 A1 der Anmelderin beschriebenen Leuchteinrichtungen oder auch anderen Leuchteinrichtungen für Fahrzeuge, in denen ein Hologramm mit einer Lichtquellenanordnung beleuchtet wird, zum Einsatz kommen.

Das Strahlenbündel 32 kann, wie in der deutschen Patentanmeldung 10 2017 124 296.1 der Anmelderin dargestellt, in dem Lichtleitkörper 34 auch durch Mehrfachreflexion an den nach außen zeigenden äußeren Flächen geführt werden, um somit das gesamte Reflexionshologramm 35 zu beleuchten, wobei jeweils ein Teil des auf das Reflexionshologramm fallenden Lichtes gebeugt bzw. gerichtet gestreut wird, um das ausgedehnte virtuelle holografische Objekt zu erzeugen (im Folgenden auch einfach kurz als virtuelles Objekt bezeichnet). Für die folgenden Erläuterungen wird lokal ein Bereich 33 betrachtet, von dem ein als Puzzleteil dargestellter Bereich 38 des virtuellen Objekts oder auch das gesamte virtuelle Objekt erzeugt wird. Das virtuelle Objekt weist virtuelle Bildpunkte 37 auf, wobei für jeden Bildpunkt virtuelle Strahlen 36 ausgehen. "Virtuell" bedeutet in diesem Fall, dass die Lichtstrahlen für einen Betrachter scheinbar von dem rekonstruierten virtuellen Objekt ausgehen, in Wirklichkeit jedoch von dem Hologramm 35 derart zu einem Betrachter hin gebeugt bzw. gerichtet gestreut werden, dass die gebeugten bzw. gestreuten Strahlen so überlagern, dass der Eindruck des virtuellen Objekts entsteht. Auch wenn hier ein virtuelles Objekt als Beispiel für ein holografisches Objekt verwendet wird, können die hier dargestellten Techniken auch auf Hologramme angewendet werden, die reelle holografische Objekte oder Objekte, die in der Ebene des Hologramms liegen, erzeugen.

Zu bemerken ist, dass derartige Hologramme, in denen ein virtuelles holografisches Objekt gespeichert ist, das dann reproduziert wird, von Hologrammen zu unterscheiden ist, die dem Bereitstellen einer optischen Funktion wie beispielsweise einer Spiegelfunktion dienen. Im ersteren Fall entsteht ein virtuelles, insbesondere dreidimensionales, ausgedehntes Objekt im Raum, welches z.B. definierte Abmessungen aufweist, während im zweiten Fall das Hologramm die Wirkung eines optischen Elements, beispielsweise eines Spiegels (Planspiegels,

Parabolspiegels, etc.) nachempfindet.

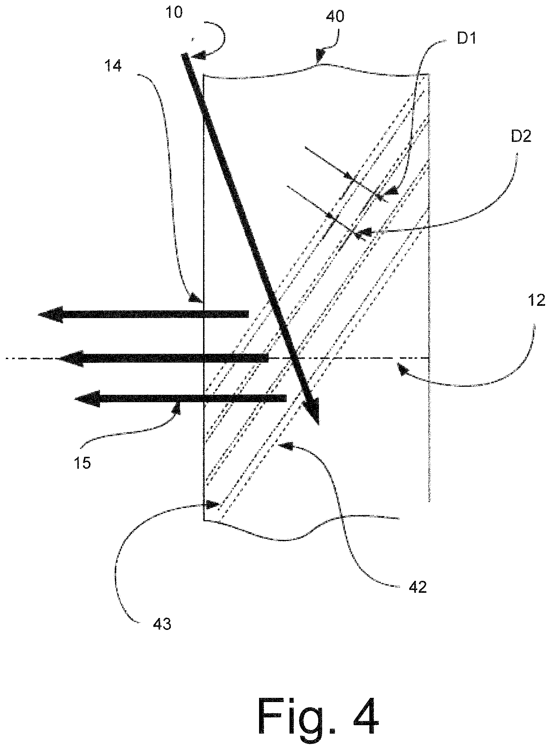

Die Fig. 4 zeigt eine schematische Querschnittsansicht eines Teils einer holografischen Schicht 40, als Implementierungsbeispiel für das Hologramm 35 der Fig. 3, insbesondere den betrachteten Bereich 33. Elemente, die den bereits unter Bezugnahme auf die Fig. 1 diskutierten Elemente entsprechen, tragen dabei die gleichen Bezugszeichen und werden nicht nochmals erläutert. Insbesondere fällt auch bei dem Ausführungsbeispiel der Fig. 4 ein Beleuchtungsstrahl 10 unter einem Winkel, beispielsweise 70 Grad zu der Normalen 12, auf die holografische Schicht 40, und in Antwort auf dieses Beleuchten werden gebeugte Objektlichtstrahlen 15 erzeugt, welche bei einem Betrachter den Eindruck eines virtuellen Objekts hervorrufen.

Die holografische Schicht 40 enthält dabei für jeden Bildpunkt des virtuellen Objekts mindestens zwei Gruppen von Bragg-Ebenen als holografische Strukturen, wobei die Gruppen zueinander parallel sind, die Abstände der Bragg-Ebenen zwischen den Gruppen jedoch verschieden sind. Hierdurch ist jede Gruppe von Bragg-Ebenen für eine andere Wellenlänge ausgelegt, wobei durch den parallelen Verlauf der Gruppen untereinander die Beugungseigenschaften für die unterschiedlichen Wellenlängen jeweils gleich sind. In dem Beispiel der Fig. 4 ist eine erste Gruppe von Bragg-Ebenen 42 mit einem Abstand D1 und eine zweite Gruppe von Bragg-Ebenen 43 mit einem Abstand D2 dargestellt. Wie bereits für die Fig. 1 erläutert, können auch bei der Fig. 4 eine Vielzahl von weiteren entsprechenden Gruppen von Bragg-Ebenen, die in anderen Richtungen verlaufen, bereitgestellt sein, um eine entsprechende Abstrahlcharakteristik der Objektlichtstrahlen entsprechend dem in der holografischen Schicht 40 gespeicherten Objekt zu erlangen.

In anderen Worten wird das gleiche Objekt für die gleiche Richtung des Beleuchtungslichtstrahls 10 mehrmals für verschiedene Wellenlängen in die holografische Schicht geschrieben. Auf diese Weise werden die mehreren Wellenlängen auf gleiche Weise von der holografischen Schicht 40 gebeugt. Die in Fig. 4 gezeigten mehreren Gruppen von Bragg-Ebenen sind dabei an jedem Punkt des Hologramms und für jeden darzustellenden Bildpunkt vorhanden, so dass insgesamt das Hologramm mehrere überlagerte Strukturen zur Rekonstruktion eines virtuellen Objekts mit gleichen Beugungseigenschaften aufweist, wobei jede der mehreren überlagerten Strukturen für eine andere Wellenlänge ausgelegt ist.

Die holografische Schicht 40 ist dabei bevorzugt relativ dick, beispielsweise dicker als 50 $\mu$m oder dicker als 140 $\mu$m, um entsprechend scharfe Beugungscharakteristiken zu erreichen, wie bereits unter Bezugnahme auf die Fig. 2 erläutert.

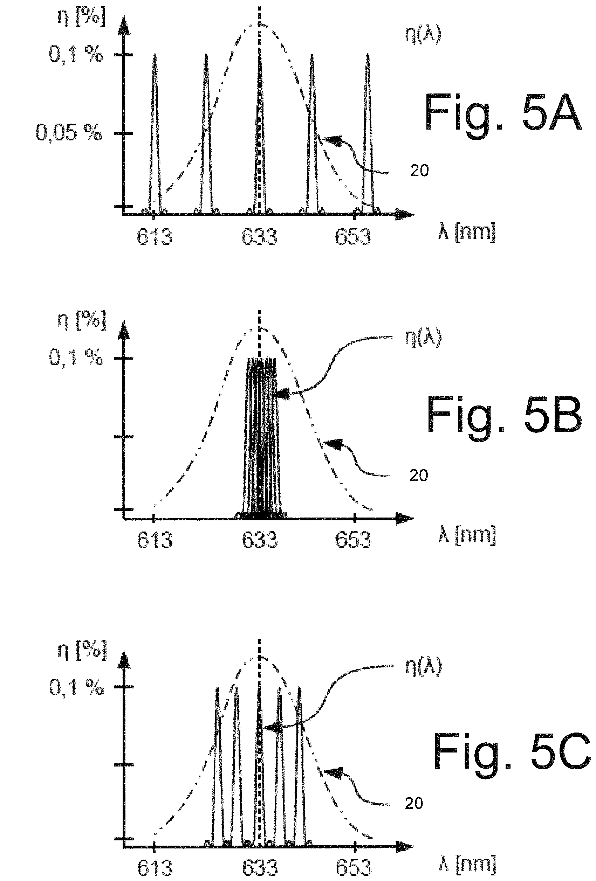

Die den verschiedenen Gruppen zugeordneten Wellenlängen können dabei relativ nahe beieinander liegen, können aber auch weiter voneinander entfernt sein. Sie liegen in einem Bereich, entsprechend Anspruch 1, der in etwa der Breite eines Spektrums einer verwendeten Lichtquelle entspricht oder etwas darüber hinausgeht. Dies wird nun unter Bezugnahme auf die Fig. 5 anhand verschiedener Ausführungsbeispiele der Erfindung erläutert.

Die Fig. 5 zeigt ähnlich der Fig. 2 die Beugungseffizienz $\eta$ in Prozent für einen Fall, in dem das Objekt für fünf verschiedene Wellenlängen in die holografische Schicht geschrieben wurde. Die Anzahl von fünf Wellenlängen ist dabei lediglich als Beispiel zu verstehen. In anderen Worten liegen in einem derartigen Fall fünf Gruppen von Bragg-Ebenen für jede Richtung von Bragg-Ebenen (also für einen jeweiligen Bildpunkt) vor, wobei die Gruppen untereinander parallel sind, aber verschiedene Abstände der Bragg-Ebenen zwischen den Gruppen entsprechend den verschiedenen Wellenlängen aufweisen.

In den Fig. 5A bis 5C ist zudem schematisch das Spektrum 20 einer Leuchtdiode gezeigt, wie bereits unter Bezugnahme auf die Fig. 2A bis 2C erläutert.

In allen Fällen der Fig. 5A bis 5C betrug die Hologrammdicke 250 $\mu$m, was zu entsprechend scharfen, bzw. schmalen, Peaks der Beugungseffizienz $\eta$ führt.

Bei dem Ausführungsbeispiel der Fig. 5A sind die einzelnen Peaks relativ weit voneinander beabstandet und äquidistant zwischen etwa 610 nm und 655 nm verteilt. Die "äußeren" Peaks liegen daher an Stellen, wo das Spektrum 20 der Leuchtdiode nur noch eine geringe Intensität aufweist.

Solange das Spektrum der Leuchtdiode wie durch die Kurve 20 dargestellt ist, liefern hauptsächlich der mittlere Peak, der Peak links von dem mittleren Peak und der Peak rechts von dem mittleren Peak den Hauptbeitrag zum gebeugten Licht. Da die Peaks sehr scharf sind, erfolgt kaum eine Verbreiterung feiner Strukturen des sich ergebenden virtuellen Objekts. Auf der anderen Seite ist so durch die weiteren Gruppen von Bragg-Ebenen die Nutzung des Spektrums der Leuchtdiode insgesamt verglichen mit dem Fall der Fig. 2C verbessert.

Zudem kann mit der Anordnung der Fig. 5A eine Drift, z.B. thermische Drift, der Lichtquellenanordnung kompensiert werden. Durch thermische Drift oder andere Schwankungen kann sich das Spektrum 20 zu höheren oder zu niedrigeren Wellenlängen hin verschieben. In diesem Fall liefert einer der beiden äußeren Peaks der Fig. 5A dann einen größeren Beitrag (derjenige, in dessen Richtung sich das Spektrum verschiebt), während andere Peaks einen geringeren Beitrag liefern. Auf diese Weise kann ein Intensitätsabfall der sich ergebenden Leuchtsignatur aufgrund von thermischer Drift verhindert oder zumindest verringert werden.

Hierzu können allgemein die Wellenlängen der verschiedenen Gruppen über einen größeren Bereich, insbesondere größer als die Halbwertsbreite des Spektrums der verwendeten Lichtquelle, verteilt sein.

Bei dem Ausführungsbeispiel der Fig. 5B sind die Peaks nahe beieinander und überlappen sich sogar. Auf diese Weise kann ein zentraler Teil des Spektrums der Leuchtdiode 20, d.h. derjenige Teil mit der größten Intensität, gut ausgenutzt werden.

Bei dem Beispiel der Fig. 5C sind die Peaks in etwa über die Halbwertsbreite des Spektrums 20 verteilt. Hier wird ein zentraler Bereich des Spektrums nach wie vor gut ausgenutzt, und bis zu einem gewissen Maß wird auch eine Drift des Spektrums zumindest annähernd kompensiert.

Zu bemerken ist, dass auch Kombinationen der in den Fig. 5A bis 5C dargestellten Möglichkeiten möglich sind. Beispielsweise können in einem zentralen Bereich des Spektrums der jeweiligen Lichtquellenanordnung mehrere überlappende Peaks angeordnet sein, entsprechend Bragg-Ebenen mit sich nur geringfügig unterscheidenden Ebenenabständen, und weiter entfernt von einem Zentrum des Spektrums können weitere Peaks angeordnet sein.

Auf diese Weise ist bei verschiedenen Ausführungsbeispielen eine verbesserte Ausnutzung des Spektrums einer Lichtquellenanordnung wie einer Leuchtdiode oder Leuchtdiodenanordnung bei gleichzeitig hoher Winkelselektivität und somit geringer Aufweitung feiner Strukturen eines darzustellenden virtuellen Objekts möglich.

Die obigen Ausführungsbeispiele dienen lediglich der Veranschaulichung und sind nicht als einschränkend auszulegen. Der Gegenstand der beanspruchten Erfindung ist eingeschränkt durch die beigefügten Ansprüche.

## Patentansprüche

1. Hologramm (35; 40) für eine Leuchteinrichtung für Fahrzeuge, umfassend eine Vielzahl überlagerter holografischer Strukturen, wobei jede der Vielzahl holografischer Strukturen eine jeweils zugeordnete Rekonstruktionswellenlänge, bei der die jeweilige holografische Struktur die maximale Beugungseffizienz aufweist, aufweist, wobei die zugeordneten Rekonstruktionswellenlängen unterschiedlich sind und jede der Vielzahl holografischer Strukturen für die jeweils zugeordnete Rekonstruktionswellenlänge gleiche Beugungsrichtungen zur Rekonstruktion eines ausgedehnten holografischen Objekts aufweist,
   **dadurch gekennzeichnet,**
   **dass** mindestens drei der Rekonstruktionswellenlängen in einem Wellenlängenintervall von 50 nm liegen.

2. Hologramm (35; 40) nach Anspruch 1, wobei jede der Vielzahl überlagerter holografischer Strukturen für einen Bildpunkt des holografischen Objekts lokal eine zugeordnete Gruppe von Bragg-Ebenen aufweist, wobei die Bragg-Ebenen dieser verschiedenen Gruppen, die dem Bildpunkt zugeordnet sind, lokal zueinander parallel sind und den jeweils zugeordneten Rekonstruktionswellenlängen entsprechende Abstände innerhalb jeder Gruppe aufweisen.

3. Hologramm (35; 40) nach Anspruch 1 oder 2, wobei eine Dicke einer aktiven Schicht des Hologramms (35; 40) größer als 50 $\mu$m ist.

4. Hologramm (35; 40) nach Anspruch 3, wobei die Dicke größer oder gleich 140 $\mu$m ist.

5. Hologramm (35; 40) nach einem der Ansprüche 1-4, wobei Halbwertsbreiten von den Rekonstruktionswellenlängen zugeordneten Beugungseffizienzen sich zumindest für manche der Rekonstruktionswellenlängen überlappen.

6. Hologramm (35; 40) nach einem der Ansprüche 1 bis 5, wobei die mindestens drei der Rekonstruktionswellenlängen in einem Wellenlängenintervall von 25 nm liegen.

7. Hologramm (35; 40) nach einem der Ansprüche 1-6, wobei die Vielzahl überlagerter holografischer Strukturen mehr als drei holografische Strukturen umfasst.

8. Hologramm (35; 40) nach Anspruch 7, wobei die Vielzahl überlagerter holografischer Strukturen mehr als fünf holografische Strukturen umfasst.

9. Leuchteinrichtung für Kraftfahrzeuge, umfassend:

   eine Lichtquellenanordnung (30) zum Erzeugen eines Beleuchtungslichtstrahls, und
   ein Hologramm (35; 40) nach einem der Ansprüche 1-8, und
   eine optische Anordnung (31, 34) zum Lenken des Beleuchtungslichtstrahls (32) auf das Hologramm (35; 40).

10. Leuchteinrichtung nach Anspruch 9, wobei die zugeordneten Rekonstruktionswellenlängen über einen Spektralbereich verteilt sind, welcher größer ist als eine Halbwertsbreite eines Spektrums der Lichtquellenanordnung (30).

## Claims

1. Hologram (35; 40) for an illumination device for vehicles, comprising a multiplicity of superimposed holographic structures, wherein each of the multiplicity of holographic structures has a respectively assigned reconstruction wavelength, at which the respective holographic structure has the maximal diffraction efficiency, wherein the assigned reconstruction wavelengths are different and each of the multiplicity of holographic structures for the respectively assigned reconstruction wavelength has identical diffraction directions for the reconstruction of an extensive holographic object,

**characterized**

**in that** at least three of the reconstruction wavelengths lie in a wavelength interval of 50 nm.

2. Hologram (35; 40) according to Claim 1, wherein each of the multiplicity of superimposed holographic structures for an image point of the holographic object locally has an assigned group of Bragg planes, wherein the Bragg planes of these different groups which are assigned to the image point are locally parallel to one another and have distances corresponding to the respectively assigned reconstruction wavelengths within each group.

3. Hologram (35; 40) according to Claim 1 or 2, wherein a thickness of an active layer of the hologram (35; 40) is greater than 50 $\mu$m.

4. Hologram (35; 40) according to Claim 3, wherein the thickness is greater than or equal to 140 $\mu$m.

5. Hologram (35; 40) according to any of Claims 1-4, wherein values of full width at half maximum for diffraction efficiencies assigned to the reconstruction wavelengths overlap at least for some of the reconstruction wavelengths.

6. Hologram (35; 40) according to any of Claims 1 to 5, wherein the at least three of the reconstruction wavelengths lie in a wavelength interval of 25 nm.

7. Hologram (35; 40) according to any of Claims 1-6, wherein the multiplicity of superimposed holographic structures comprises more than three holographic structures.

8. Hologram (35; 40) according to Claim 7, wherein the multiplicity of superimposed holographic structures comprises more than five holographic structures.

9. Illumination device for motor vehicles, comprising:

   a light source arrangement (30) for generating an illumination light beam, and
   a hologram (35; 40) according to any of Claims 1-8, and an optical arrangement (31, 34) for directing the illumination light beam (32) onto the hologram (35; 40).

10. Illumination device according to Claim 9, wherein the assigned reconstruction wavelengths are distributed over a spectral range which is greater than a full width at half maximum of a spectrum of the light source arrangement (30).

**Revendications**

1. Hologramme (35 ; 40) destiné à un dispositif d'éclairage destiné à des véhicules, ledit hologramme comprenant un grand nombre de structures holographiques superposées, chacune du grand nombre de structures holographiques ayant une longueur d'onde de reconstruction respectivement associée pour laquelle la structure holographique respective présente l'efficacité de diffraction maximale, les longueurs d'onde de reconstruction associées étant différentes et chacune du grand nombre de structures holographiques ayant les mêmes directions de diffraction pour la longueur d'onde de reconstruction respectivement associée afin de reconstruire un objet holographique étendu,

   **caractérisé en ce que**

   au moins trois des longueurs d'onde de reconstruction sont situées dans un intervalle de longueur d'onde de 50 nm.

2. Hologramme (35 ; 40) selon la revendication 1, chacune du grand nombre de structures holographiques superposées comportant localement un groupe associé de plans de Bragg pour un pixel de l'objet holographique, les plans de Bragg de ces différents groupes, qui sont associés au pixel, étant localement parallèles entre eux et comportant à l'intérieur de chaque groupe des distances qui correspondent aux longueurs d'onde de reconstruction respectivement associées.

3. Hologramme (35 ; 40) selon la revendication 1 ou 2, une épaisseur d'une couche active de l'hologramme (35 ; 40) étant supérieure à 50 $\mu$m.

**4.** Hologramme (35 ; 40) selon la revendication 3, l'épaisseur étant supérieure ou égale à 140 µm.

**5.** Hologramme (35 ; 40) selon l'une des revendications 1 à 4, les largeurs de valeur moyenne des efficacités de diffraction associées aux longueurs d'onde de reconstruction se chevauchant au moins pour certaines des longueurs d'onde de reconstruction.

**6.** Hologramme (35 ; 40) selon l'une des revendications 1 à 5, les au moins trois des longueurs d'onde de reconstruction étant dans un intervalle de longueur d'onde de 25 nm.

**7.** Hologramme (35 ; 40) selon l'une des revendications 1 à 6, le grand nombre de structures holographiques superposées comprenant plus de trois structures holographiques.

**8.** Hologramme (35 ; 40) selon la revendication 7, le grand nombre de structures holographiques superposées comprenant plus de cinq structures holographiques.

**9.** Dispositif d'éclairage destiné à des véhicules automobiles, ledit dispositif d'éclairage comprenant :

un ensemble de sources de lumière (30) destiné à générer un faisceau lumineux d'éclairage, et
un hologramme (35 ; 40) selon l'une des revendications 1 à 8, et
un ensemble optique (31, 34) destiné à diriger le faisceau de lumière d'éclairage (32) sur l'hologramme (35 ; 40).

**10.** Dispositif d'éclairage selon la revendication 9, les longueurs d'onde de reconstruction associées étant réparties sur un domaine spectral qui est supérieur à une largeur de valeur moyenne d'un spectre de l'ensemble de sources de lumière (30).

# Fig. 1
(Stand der Technik)

Fig. 2A
(Stand der Technik)

Fig. 2B
(Stand der Technik)

Fig. 2C
(Stand der Technik)

Fig. 3

Fig. 4

Fig. 5A

Fig. 5B

Fig. 5C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016117969 A1
- DE 102017124296
- US 2011194163 A
- DE 102017124269

**In der Beschreibung aufgeführte Nicht-Patentliteratur**

- **PEERCY M S et al.** WAVELENGTH SELECTION FOR TRUE-COLOR HOLOGRAPHY. *APPLIED OPTICS,* 1994, vol. 33 (29), 6811-6817
- **PHILIPPE GENTET et al.** LED's Wavelengths Improve Drastically the Quality of Illumination of Pulsed Digital Holograms. *DIGITAL HOLOGRAPHY AND THREE-DIMENSIONAL IMAGING,* 2017